**Europäisches Patentamt**

**European Patent Office**

**Office européen des brevets**

(11) Veröffentlichungsnummer: **0 163 030**
**B1**

# EUROPÄISCHE PATENTSCHRIFT

(45) Veröffentlichungstag der Patentschrift: **01.08.90**

(21) Anmeldenummer: **85103280.5**

(22) Anmeldetag: **21.03.85**

(51) Int. Cl.⁵: **B 23 P 15/18, F 16 D 69/00**

(54) **Automatisiertes Verfahren zur Herstellung von Bremsbelägen und Vorrichtung zur Durchführung des Verfahrens.**

(30) Priorität: **01.06.84 DE 3420424**

(43) Veröffentlichungstag der Anmeldung:
**04.12.85 Patentblatt 85/49**

(45) Bekanntmachung des Hinweises auf die Patenterteilung:
**01.08.90 Patentblatt 90/31**

(84) Benannte Vertragsstaaten:
**DE FR GB IT SE**

(56) Entgegenhaltungen:
**EP-A-0 084 591**
**DE-A-2 359 075**
**DE-C- 333 440**
**FR-A-1 392 681**
**GB-A-1 426 122**

(73) Patentinhaber: **ALFRED TEVES GmbH**
**Guerickestrasse 7 Postfach 119 155**
**D-6000 Frankfurt am Main (DE)**

(72) Erfinder: **Veith, Christoph**
**Hermann-Löns-Weg 10**
**D-6242 Kronberg (DE)**
Erfinder: **Trossi, Riccardo**
**Via Gallo, 25**
**I-12032 Barge CN (IT)**

(74) Vertreter: **Grau, Ulf**
**c/o ALFRED TEVES GMBH Guerickestrasse 7**
**D-6000 Frankfurt (M) 90 (DE)**

Courier Press, Leamington Spa, England.

**Beschreibung**

Die Erfindung betrifft ein automatisiertes Verfahren zur Herstellung von Bremsbelägen gemäß dem Oberbegriff des Patentanspruches 1, eine Vorrichtung zur Durchführung dieses Verfahrens gemäß dem Oberbegriff des Patentanspruches 7, sowie einen Bremsbelag gemäß dem Oberbegriff des Patentanspruches 23.

In der Praxis erfolgt die Herstellung von Bremsbelägen, die eine metallische Rückenplatte und einen damit verklebten Reibkörper aufweisen, üblicherweise and Handarbeitsplätzen. Der Produktionsablauf stellt sich dabei im wesentlichen wie folgt dar. Die Rückenplatten werden in Kartons oder Blechkisten angeliefert und über eine Hilfsvorrichtung zunächst in einen Sandfunker eingegeben. Die Teile eines Loses laufen dabei meist auf zwei Arbeitsgänge verteilt durch den Sandfunker. Danach werden sie in Blechkisten ausgeschüttet. Die aufgerauhten Teile gehen vom Sandfunker zu Handarbeitsplätzen, wo die Teile auf die einzelnen Handarbeitsplätze verteilt werden. An diesen Handarbeitsplätzen werden die aufgereauhten Teile aus den Blechkisten entnommen und mit der Schriftseite nach unten auf einem Blech abgelegt. Ist ein Blech mit Rückenplatten belegt, wird es über eine Transportstrecke einer Klebestation zugeführt, in der die obenliegende Seite der Rückenplatten mit Klebstoff versehen wird. Eine Verschmutzung der Bleche durch Kleber versucht man dadurch zu verhindern, daß auf das Blech unter die Rückenplatten ein Karton aufgelegt ist. Nach dem Auftragen des Klebstoffes laufen die Bleche mit den Rückenplatten durch einen Trockenofen, in dem das Ablüften des Klebstoffes beschleunigt wird. Am Ende der Trockenstrecke werden die Bleche auf ein Ausgabeband übergeben, von dem sie in einen Tablettwagen überführt werden können. Die gefüllten Wagen können dann zum weiteren Ablüften in einem Zwischenlager abgestellt werden, so daß die Rückenplatten nach etwa 24 Stunden von den Blechen genommen und den Pressen zugeführt werden können, in denen die Reibkörper auf die Rückenplatten geklebt werden. In einem weiteren Handarbeitsplatz werden die leeren Bleche wieder für einen neuen Durchlauf vorbereitet. Dieser Produktionsablauf ist zeit- bzw. personalaufwendig und damit teuer. Da die Geschwindigkeit der Klebe- und Trockenstrecke auf eine optimales Auflegen in den Handarbeitsplätzen abgestimmt ist, ergeben sich immer wieder Lücken zwischen den einzelnen Blechen bei der Übergabe durch Störungen im Auflagebereich.

Solch ein Verfahren ist z.B. aus der GB—A—1 426 122 bekannt, in der eine gewünschte Speicherung von Bremsbackeneinheiten beschrieben ist. Die Bremsbackeneinheit besteht aus einer Trägerplatte und einem Belag, die zusammengepreßt sind und die als halbwertiges Produkt betrachtet werden können. Diese Einheit kann solange wie gewünscht, z.B. mehrerer Wochen, ohne Nachteil zwischengespeichert und danach durch einen Härtungsofen geschoben und dabei su Ende gefertigt werden. Die Beläge, die eine trockene Klebeschicht aufweisen, konnen in einem Magazin gespeichert und von Hand oder automatisch auf ein Förderband gebracht sein. Vorteilhaft werden die Beläge schubweise in einen Tank eingeführt, in der ein Lösungsmittel zum Aufweichen einer Oberfläche des Klebers vorhanden ist. Eine Zwischenlagerung der Trägerplatten in einem Magazin ist nicht näher beschrieben.

Aus der EP—A—0 084 591 ist ein Reibbelag bekannt, der aus einem auf einem Trägerblech befestigten Block aus einer gepreßten Reibmaterialmischung besteht. Das Trägerblech weist auf der den Reibwerkstoff tragenden Seite eine Strukturoberfläche aus kraft- und formschlüßbildenden, aus dem Trägerblechmaterial geformten Formelementen auf, die mit Hinterschneidungen, Einziehungen oder dergl. versehen sind. Auf der Strukturoberfläche ist die aufgepreßte Reibmaterialmichung in Blockform unter Ausführung der Hinterschneidungen, Einziehungen oder dergl. der einzelnen Formelemente befestigt. Als mit dem Reibwerkstoffblock kraft- und formschlußbildendes Element kann einerseits auf dem Trägerblech ein Drahtgitter angeordnet oder andererseits auf die den Reibwerkstoffblock tragende Seite des Trägerbleches ein Bett aus einer Vielzahl von Kleinformkörpern aufgesintert sein. Nachteilig sind aufwendige Arbeitsschritte notwendig, um die Strukturoberfläche zu formen.

Es war ferner aus der gattungsbildenden FR—A—1 392 681 bekannt, in der Rückenplatte eines Reibbelages durchgehende Öffnungen vorzusehen, in denen Vorsprünge des Reibkörpers eingreifen, um die Verbindung zwischen der Rückenplatte und dem verklebten Reibkörper gegenüber Scherkräften zu verbessern. Es sind zusätzliche Mittel, wie Nieten oder ein Metallgrill notwendig, die zu einer Befestigung des Reibmaterials dienen. Eine Handhabung der Rückenplatten mit noch aktivem Klebstoff bleibt unerwähnt.

Der Erfindung liegt daher die Aufgabe zugrunde, ein automatisiertes Verfahren bzw. eine Vorrichtung zur Durchführung des Verfahrens anzugeben, das insbesondere eine Behandlung von Rückenplatten vor dem Zusammenkleben von Rückenplatten und Reibkörper zu einer Bremsbelageinheit beschreibt. Diese Aufgabe wird gemäß den Merkmalen der Patentansprüche 1, 7 und 23 gelöst.

Mit der erfindungsgemäßen Lösung wird ein automatisiertes Verfahren bzw. eine Vorrichtung zur Durchführung dieses Verfahrens angegeben, bei dem Handarbeit weitgehend entfällt und bei dem ein Umlauf von Transportmitteln nicht mehr erforderlich ist. Der Materialfluß ist dabei im wesentlichen folgender. Die Rückenplatten gehen von einem Rohteillager zunächst zu einem Sandstrahler. Danach werden die Teile vereinzelt und wenn nötig gewendet, so daß die mit Klebstoff zu versehenden Flächen nach oben zeigen. Im Anschluß daran werden die Teile durch Drehen in eine bestimmte Lage gebracht. Die ausgerichteten Teile werden daraufhin in die Klebstoffstation übergeben. Danach durchlaufen sie eine Trockenstrecke und werden am Ende dieser Trockenstrecke in Magazinen abgestapelt. In diesen

2

Magazinen gehen die mit Klebstoff versehenen Rückenplatten zu Presserei, in der die Rückenplatten mit dem Reibkörper verbunden wird. Für spezielle Sonderanfertigungen besteht die Möglichkeit, unmittelbar vor der Klebstoffstation belegte Bleche manuell einzugeben, die direkt nach der Trockenstrecke wieder entnommen werden können.

Ein vorteilhafte Ausgestaltung der Erfindung sieht vor, daß die Rückenplatten vereinzelt und ausgerichtet in zumindest einer Reihe angeordnet werden, daß die Rückenplatten gewendet werden, so daß alle Rückenplatten mit der Klebeseite nach oben angeordnet sind, daß in einem weiteren Verfahrensschritt ein Längausrichtung der Rückenplatten erfolgt und daß auf die Klebeseite der Rückenplatten Klebstoff aufgetragen wird.

Als Hilfsmerkmale werden an der Klebseite der Rückenplatten bevorzugt Noppen angeformt. Durch diese Noppen wird auf einfache Weise ermöglicht, die Teile mit Rücken- oder Bauchlage relativ einfach und schnell, d.h. passiv auszusortieren. Zwar könnten auch an der Rückenplatte bereits vorhandene Merkmale, wie beispeilsweise eine auf einer Seite der Platte eingestanzte Schrift als Erkennungsmerkmal dienen. Dies würde jedoch in der Regel komplexere Erkennungssysteme voraussetzen. Ein weiterer Vorteil durch die Noppen ergibt sich beim Magazinieren der Teile. Um die Platten direkt nach der Trockenstrecke in Magazinen abspeichern zu können, muß verhindert werden, daß auf die mit Klebstoff besprühte Fläche eine weitere Platte flächig aufgedrückt wird, da sonst ein Verkleben der beiden Platten eintritt. Durch die Punktauflage wird diese flächige Berührung verhindert. Durch den Spalt, der sich dadurch zwischen den Platten bildet, ist zudem ein Ablüften der Klebeflächen in dem Magazin möglich. Dadurch kann u.U. die Trockenstrecke zu Ablüften verkürzt oder auf ein Beheizen der Trockenstrecke grundsätzlich versichtet werden, womit zusätzliche Energieeinsparungen möglich werden. Um eine sichere Auflage der Platten sicherzustellen, sollten wenigstens drei, insbesondere vier möglichst weit voneinander entfernte Punkte gewählt werden, die zweckmäßig an Begrenzungsrändern von in der Rückenplattevorgesehenen Ausnehmungen angeordnet werden. Weisen die Rückenplatten beispielsweise durchgehende Löcher auf, so werden die Noppen zweckmäßig an deren Rändern angeordnet, wobei bei Platten mit nur zwei Löchern jeweils zweckmäßig zwei Noppen vorgesehen werden. Die Höhe und Form der Noppen ist von Bedeutung für das Sortier- und Ablüftverhalten der Teile. Aus Gründen der Funktionssicherheit und im Interesse eines guten Ablüftens ist möglichst eine Höhe von einem Millimeter anzustreben. Zudem sollten die Noppen möglichst scharfkantig ausgeführt sein. Aus Gründen der Funktionssicherheit der Anlage sind an die Toleranzen bestimmte Anforderungen zu stellen. Die normalerweise vorgegebenen Toleranzen für Länge, Breite und Stärke der Rückenplatten sind in der Regel ausreichend. Um die Wirkung der Noppen zu gewährleisten, ist besonders auf das Einhalten der Toleranz von 0,2 mm für die Ebenheit der Platten zu achten.

Die erfindungsgemäße Vorrichtung ist gekennzeichnet durch folgende aufeinanderfolgend angeordnete Stationen: Eine Vereinzelungsstation, in der die Rückenplatten vereinzelt und in zumindest einer Reihe geordnet werden, ein Wendestation, in der auf der Klebeseite liegende Rückenplatten gewendet werden, um die Station mit der Klebeseite nach oben zu verlassen, ein Ausrichtstation, in der die Rückenplatten in Längsrichtung ausgerichtet werden, ein Lageprüf- und Drehstation, in der die Rückenplatten gedreht werden, so daß alle Rückenplatten die Station in gleicher Lage verlassen, eine Klebstation, in der der Klebstoff auf die Rückenplatte aufgetragen wird, ein Trockenstation zum Ablüften des Klebstoffes und eine Ausgabestation zu Ausgeben und Stapeln der Rückenplatten in Magazinen.

Vor der Vereinzelungsstation kann gemäß einer Ausgestaltung der Erfindung eine Sandstrahlstation angeordnet sein.

Die Vereinzelungsstation weist zweckmäßig zumindest eine Schikane auf, um die Rückenplatten in eine Reihe zu bringen. Angrenzend an die Schikane ist ein Kanal angeordnet, so daß die Rückenplatten über die Schikane in den Kanal geführt werden. Zweckmäßig ist der Kanal als verfahrbarer Doppel- bzw. Mehrfachkanal ausgebildet, um die eingelaufenen Rückenplatten gleichmäßig auf zwei oder mehrere Bänder zu verteilen, die aufgrund der intermittierenden Beschickung dann langsamer laufen können. An die Kanaäle anschließend ist eine Transportstrecke vorgesehen, die eine der Anzahl der Kanäle entsprechende Anzahl von parallelen Transportbändern aufweist. An diese wiederum kann sich eine entsprechende Anzahl schnellaufender Transportbänder anschließen, um die Abstände zwischen den Platten zu vergrößern.

Gemäß einer weiteren Ausgestaltung der Erfindung weist die Wendestation eine schiefe Ebene auf, auf die zumindest eine Schikane angeordnet ist, um die Rückenplatten mit der Klebeseite nach unten seitlich auszulenken, so daß sie beim Fallen von Rand der schiefen Ebene auf ein darunter angeordnetes Transportband gewendet werden.

Die Längsausrichtstation weist zweckmäßig Schikanen auf, um die Rückenplatten passiv auszurichten.

Nach dem Sortier- und Ausrichtvorgängen und vor der Übergabe zum Klebstoffbeschichten wird zweckmäßig eine Staustrecke vorgesehen. Dadurch können kurzzeitige Störungen der vorgeschalteten und nachfolgenden Stationen kompensiert werden.

Die Klebestation weist eine Klebersprüheinrichtung auf, sowie ein grobmaschiges Transportband, auf dem die Rückenplatten beim Transport durch die Station angeordnet sind. Durch die Zwischenräume und ggf. vorhandene Löcher in den Teilen gelangt damit nur ein kleiner Anteil des versprühten Klebstoffes auf das Transportband. Dieses wird zweckmäßig nach Abgabe der Teile direkt in ein Reinigungsbad geleitet, wo es durch Lösungsmittel und mechanisch durch Bürsten vom Klebstoff befreit werden kann.

3

Bei einem erfindungsgemäßen Bremsbelag ist die Rückenplatte mit Hilfsmerkmalen für eine nachfolgende automatisierte Behandlung versehen.

Ausführungsbeispiele der Erfindung und ihrer Ausgestaltungen sind in der Zeichnung dargestellt und im folgenden beschrieben.

Es zeigen

Fig. 1 einen Bremsbelag von hinten, d.h. von der Rückenplattenseite her gesehen;
Fig. 2 einen Schnitt durch den Bremsbelag der Fig. 1 entlang der Linie II—II;
Fig. 3 eine schematische Darstellung der Linie für die automatisierte Herstellung von Bremsbelägen;
Fig. 4 eine schematische Darstellung der Klebestation;
Fig. 5 ein Seitenansicht eines Rückenplattenstapels;
Fig. 6 eine graphische Darstellung der Ausbringung und Taktseiten in Abhängigkeit von der Teilelänge.

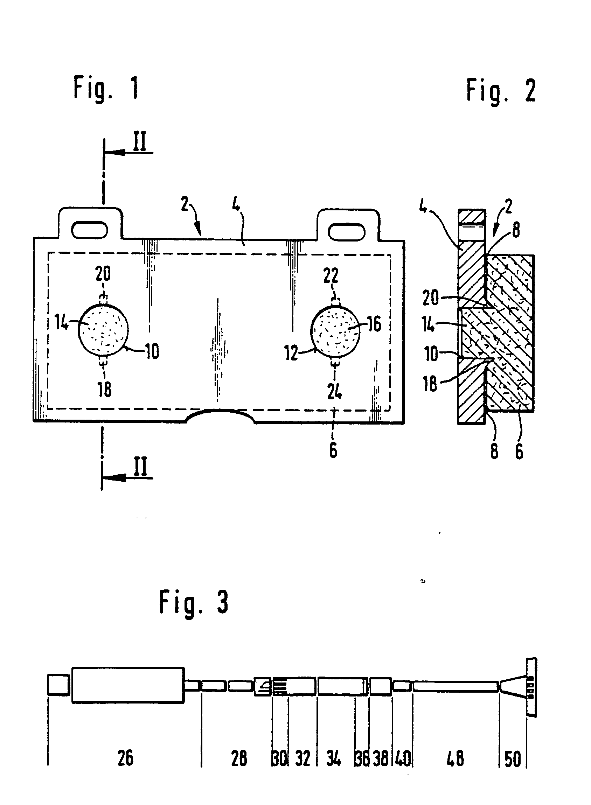

Der in den Fig. 1 und 2 dargestellte Bremsbelag 2 weist eine Rückenplatte 4 und einen Reibkörper 6 auf, die über eine dazwischenliegende Klebstoffschicht 8 fest miteinander verbunden sind. Zur Verbesserung der Verbindung gegenüber Scherkräften sind in der Rückenplatte 4 zwei durchgehende Öffnungen 10, 12 vorgesehen, in denen Fortsätze 14, 16 des Reibkörpers 6 angeordnet sind. An den Begrenzungsrändern der Öffnungen 10, 12 sind jeweils zwei noppenförmige Vorsprünge 18, 20 bzw. 22, 24 vorgesehen, die als Hilfsmerkmal zu Ausrichten und Stapeln der Belagrückenplatte 4 dienen, wie im folgenden näher beschrieben ist. Da die Noppen 18, 20, 22, 24 auf der Klebeseite der Rückenplatte 4 angeordnet sind, sind sie in Fig. 1 gestrichelt dargestellt. Grundsätzlich kommen für die Anbringung der Noppen auch andere Begrenzungslinien der Rückenplatte 4 in Frage, wobei es zweckmäßig ist, die einzelnen Noppen so weit wie möglich vom Schwerpunkt und voneinander entfernt anzuordnen.

Es wird nun auf Fig. 3 Bezug genommen, aus der der Materialfluß der automatisierten Bremsbelagherstellung ersichtlich ist.

Die Rückenplatten 2 gehen vom Rohteillager erforderlichenfalls zunächst zu einem Sandstrahler 26. Hierbei kann es sich um einen Sandfunker handeln, der zur Teilebereitstellung durch einen Bunker mit Austrag ergänzt wird, in den die aufgerauhten Teile ausgegeben werden. Vom Bunkeraustrag werden die Teile in die Automatiklinie übergeben. Diese Lösung setzt voraus, daß der Durchsatz des Sandfunkers auf die Geschwindigkeit der Automatiklinie abgestimmt werden kann. Eine andere Alternative sieht vor, daß der Sandfunker durch eine Sandstrahlanlage ersetzt wird, die Vorteile bezüglich Automatisierung und Produktqualität bringt. Aus einem Vorratsbunker werden die Teile in den Sandstrahlautomaten eingegeben. Nach dem Durchlaufen des Automaten werden die Teile nacheinander ausgegeben. Die Durchlaufzeit durch den Automaten kann in einem bestimmten Bereich variiert werden. Ebenso kann gezielt eine vorgegebene Rauhtiefe über die Plattenoberfläche erreicht werden. Das Strahlmittel befindet sich in einem internen Umlauf und verläßt bei zu starker Abnutzung die Anlage über eine Absaugung. Bei Auswahl eines entsprechend großen Vorratsbunkers, bzw. über eine automatische Nachfülleinrichtung, läuft diese Station ohne Personaleinsatz.

In der Vereinzelungsstation 28 werden die Teile zunächst geordnet und auf vier Bahnen für die weiteren Sortiervorgänge verteilt. Von der Sandstrahlausgabe fallen die Teile auf ein schneller laufendes Band, wodurch der Abstand zwischen den Teilen zunächst vergrößert wird. Über eine Schikane werden die Platten in eine Reihe gebracht und laufen in einen Kanal ein, wo sie sich anzustauen beginnen. Durch Verfahren der mit einem Doppelkanal ausgestatteten Einheit werden die eingelaufenen Teile gleichmäßig auf zwei Bänder verteilt, die aufgrund der intermittierenden Beschickung langsamer laufen können. Von den jeweiligen Bändern werden die Platten nochmals auf ein wesentlich schneller laufendes Band übergeben. Durch die entstehenden Abstände können die Platten von den nachfolgenden aktiven Weichen sicher auf nochmals zwei Bahnen verteilt werden. Hierdurch verdoppelt sich der Abstand der Teile, was zur Funktionssicherheit der nachfolgenden Stationen beiträgt.

In der Wendestation 30 erfolgt ein Aussortieren von Platten in Rücken- oder Bauchlage mit angeschlossenem Wenden, so daß alle Platten die Station mit der Klebeseite nach oben verlassen. Zu diesem Zwecke werden die Rückenplatten vom Band kommend auf eine schiefe Ebene übergeben, auf der sie hinabgeleiten. Durch die auf der Ebene angebrachten Schikanen werden Teile mit der Klebeseite nach unter seitlich ausgelenkt. Beim Fallen vom Rand der schiefen Ebene auf das darunter laufende Band werden die Teile gewendet. Teile mit nach oben gerichteter Klebeseite laufen geradlinig über die schiefe Ebene auf das untere Band. Durch das Aussortieren ergeben sich aus den bisher zwei Bahnen nunmehr vier Bahnen, die bis zum Abstapeln in die Magazine beibehalten werden. Um den passiven Aussortiervorgang zu ermöglichen, ist es notwendig, für die Klebeseiten der Platten entsprechende Hilfsmerkmale auszuwählen bzw. vorzusehen, wie sie in Form von Noppen 18, 20, 22, 24 bei dem in fig. 1 und 2 dargestellten Bremsbelag 2 vorgesehen sind.

In der nachfolgenden Längsausrichtstation 32 erfolgt in vier parallelen Schikanen passiv das Längsausrichten der Teile. Die Platten werden auf dem Band, auf das sie in der Wendestation 30 aufgegeben wurden, an Schikanen vorbeigeführt, wobei sich die Platten selbsttätig an die Führungskontur anlegen. Für Teile mit einem Verhältnis Länge/Breite ist das Verhalten völlig unproblematisch, so daß für diese Teile auch gleichartige Schikanen verwendet werden können. Etwas problematischer sind jedoch Teile, bei denen die Länge in etwa der Breite der Teile entspricht, d.h. nahezu quadratische Teile. Da jedoch in der Regel keine exakt quadratischen Platten vorliegen, sin auch diese Teile ausrichtbar. Hierfür bedarf es mitunter einer zusätzlichen Richteinheit und Schikane. Um die Funktion der Ausrichtschikanen

4

sicherzustellen, ist es Bedingung, daß die Teile nicht dicht nacheinander in die Schikane einlaufen; dies wird bereits in der Vereinzelungsstation 28 durch Herstellen eines bestimmten Abstandes erreicht. Nach der Langsausrichtstation 32 laufen die Rückenplatten 2 in vier Bahnen parallel aus, wobei sie lediglich noch eine um 180° gedrehte Lage zueinander haben können.

Nach den Sortier- und Ausrichtvorgängen und vor der Übergabe zum Klebstoffbeschichten ist eine Staustrecke 34 vorgesehen. Beim Anlauf wird die Staustrecke 34 zunächst etwa zur Hälfte gefüllt. Dadurch kann sie kurzzeitige Störungen der vorgeschalteten oder nachfolgenden Stationen übernehmen. Die Staustrecke 34 ist mit einem Überwachungssystem ausgestattet, das durch entsprechende Belegung verschiedene Anlagenteile ab- oder wieder zuschalten kann.

In einer Lageprüf- und Drehstation 36 wird über ein Erkennungssystem die Lage der Rückenplatten geprüft und die Rückenplatte erforderlichenfalls um 180°C gedreht, so daß alle Rückenplatten die Lageprüf- und Drehstation 36 in gleicher Lage verlassen. In die Vierfachstation läuft gleichzeitig immer je ein Teil pro Bahn ein. Über das Erkennungssystem wird zunächst ermittelt, ob sich das Teil bereits in seiner gewünschten oder in der um 180° gedrehten Lage befindet. Ist letzteres der Fall, werden die entsprechenden Teile gedreht. Daraufhin befinden sich alle Platten in der gewünschten Lage.

Die ausgerichteten Rückenplatten 4 werden in einer nachfolgenden Übergabestation 38 auf das Transportband einer Klebestation 40 übergeben. Durch das Drehen der Teile in der Lageprüf- und Drehstation bedingt, haben die Teile einen entsprechenden seitlichen Abstand zueinander. In der Klebestation 40 sollen die Teile jedoch möglichst dich aneinanderliegen. Zu diesem Zwecke werden die ausgerichteten Teile über Schikanen, in denen sie ihre Orientierung nicht mehr ändern können, zusammengeführt. Die Rückenplatten 4 werden nun mit einem geringen seitlichen Abstand von etwa einem Millimeter und hintereinander dicht an dicht liegend von etwas schneller laufenden Übergabeband auf das Transportband der Klebestation 40 übergeschoben. Durch den Geschwindigkeitsunterschied wird sichergestellt, daß die Teile immer dicht an dicht liegen. Zudem dient die Übergabestrecke als kleiner Störpuffer.

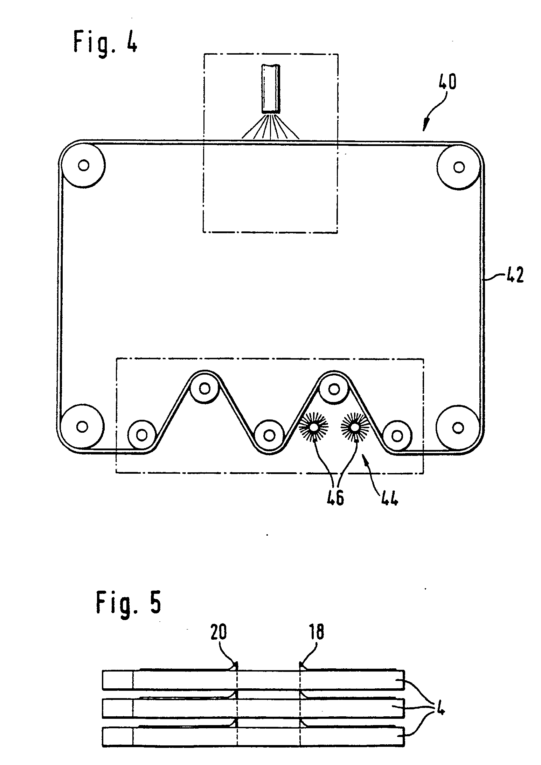

In der Klebestation 40, wie sie in Fig. 4 im einzelnen dargestellt ist, erfolgt der Teiletransport durch ein endloses grobmaschiges Band 42. Durch die Zwischenräume und die Löcher in den Teilen gelangt ein kleiner Anteil des versprühten Klebstoffes auf das Transportband. Direkt nach der Sprühkabine werden die Platten auf ein weiteres Band übergeben. Das Maschenband der Klebestation wird nach der Abgabe der Teile direkt in ein Reinigungsbad 44 geleitet. Dort wird es durch Lösungsmittel und mechanisch durch Bürsten 46 vok Klebstoff befreit. Das gereinigte Band kann nun wieder mit Platten belegt werden. Der im Bad abgewaschene Klebstoff geht verloren. Aufgrund der geringen Flächendeckung des Bandes von nur etwa 15% handelt es sich hierbi jedoch um eine sehr geringe Menge. Klebstoffeinsparungen können durch Auffangen und Wiederaufbereiten des Klebstoffes realisiert werden. Der Klebstoff, der seitlich an den Platten vorbei oder durch das Maschennetz hindurchgesprüht wird, kann abgesaugt und dem Vorratsbehälter wieder zugeführt werden. Das Versprühen des Klebstoffes in der Klebestation 40 erfolgt mittels oszillierender Sprühpistole, wobei die Sprühbreite entsprechend der Auflagebreite der gefahrenen Typen eingestellt werden kann.

Anschließend an die Klebestation 40 ist eine Trockenstrecke 48 und eine Ausgabestation 50 vorgesehen, die ein gemeinsames Transportband aufweisen, das beide Stationen durchläuft. Die Trockenstrecke dient dem Ablüften des Klebstoffes. Durch die Punktauflage der Platten in den Magazinen — wie schematisch in Fig. 5 dargestellt — kann der Trockenvorgang gegenüber dem Istzustand minimiert werden, so daß eine Belüftung des Trockenraumes ohne zusätzliche Heizung ausreicht. Am Ende der Transportstrecke werden die Rückenplatten in Magazine ausgegeben. Zu diezem Zwecke werden die vier nebeneinanderliegenden Reihen entsprechend der Übergabestation 38 wieder aufgefächert. In der Ausgabestation 50 steht für je eine Reihe ein Magazin bereit. Durch eine Verfahreinheit werden die Platten in die Magazine übergeschoben. Die Magazine behalten hierbei ihre fixe Höhe bei. In die Magazine fährt von unten ein Zylinder ein, der die eingegebenen Teile beim Befüllen langsam absenkt. Sind die vier Magazine befüllt, fahren sie automatisch aus der Station aus und vier bereitgestellte Magazine können eingefahren werden.

Am Ende der Automatiklinie werden leere Magazine bereitgestellt bzw. die gefüllten Magazine weitergegeben. Um die Bedienung zu erleichtern, können teilautomatisierte Fertigungsabläufe zum Ein- und Ausfahren von Magazinen in die Ausgabestation und Handhabungshilfen zum Umsetzen der gefüllten Magazine vorgesehen werden. Die gefüllten Magazine werden dann in die Presserei überführt, in der eine Verbindung der Rückenplatten mit den Reibkörpern erfolgt.

Die Ausbringung der Anlage wird bestimmt durch Bandgeschwindigkeiten und Anzahl der Bahnen, die durch die Klebestation 40 laufen. Eine konstante Bandgeschwindigkeit wiederum gibt für unterschiedlich lange Teile unterschiedliche Taktzeiten für das Prüfen und Drehen der Rückenplatten in der Lageprüf- und Drehstation 36 vor. Für die Lageprüf- und Drehstation muß zunächst von einer Mindesttaktzeit von 1,5 s ausgegangen werden. In der Praxis kann die Taktzeit eventuell kleiner gewählt werden, wenn nur ein bestimmter Anteil von Rückenplatten gedreht werden muß. Hieraus können sich Kapazitätsreserven der Anlage ergeben. Um eine gleichmäßige Schichtdicke in der Klebersprühstation zu gewährleisten, wird die Bandgeschwindigkeit dort konstant gehalten. Dies führt zu unterschiedlichen Ausbringungen in Abhängigkeit von der Länge der Rückenplatten. Diese Zusammenhänge lassen sich wie folgt zusammenfassen:

Taktzeit

$$t_T = \frac{3 \cdot 1}{50 \cdot V_B} \qquad (1)$$

$V_B$ Bandgeschwindigkeit $\quad \dfrac{m}{min}$

1 Teilelänge $\qquad$ mm

$t_T$ Taktzeit $\qquad$ s

Produktionszeiten $\qquad t_N = t_p \cdot A_G$

$t_N$ Produktionsnutzzeit $\qquad$ s

$t_p$ gesamte Produktionszeit $\qquad$ s

$A_G$ Ausbringungsgrad $\qquad$ %

Ausbringung $\qquad A = z\dfrac{t_p \cdot 50 \, v_B}{3.1} \cdot A_G$

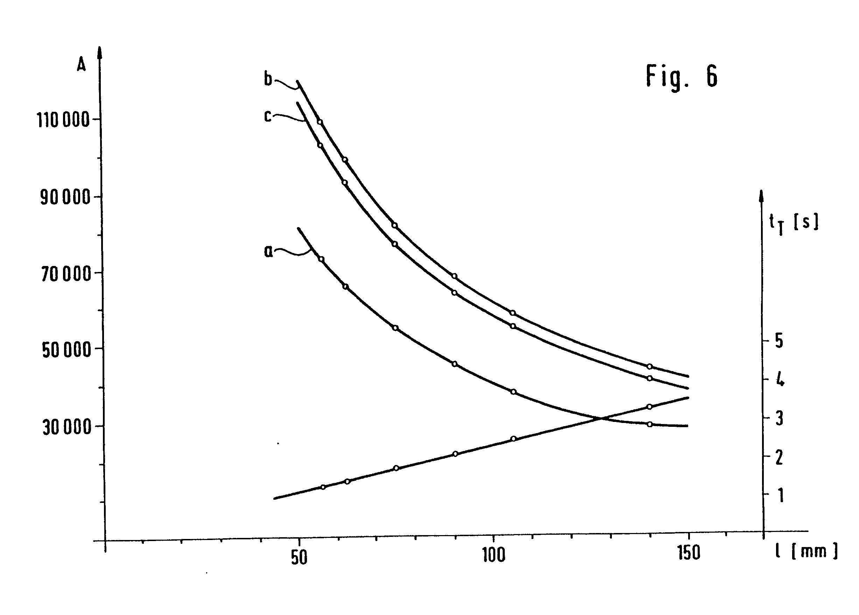

Fig. 6 zeigt die graphische Darstellung dieser Zusammenhänge. Den Kurven wurden folgende Werte zugrunde gelegt.

Bandgeschwindigkeit $\quad V_B \quad$ 2,5 $\quad \dfrac{m}{min}$

| Produktionszeit | $t_p$ | a) | 28 800 | s(1-schichtig) |
| | | b) | 43 200 | s(1,5-schichtig) |
| | | c) | 28 800 | s(1-schichtig) |

| Anzahl der Bahnen | z | a) | 4 | Bahnen |
| | | b) | 4 | Bahnen |
| | | c) | 6 | Bahnen |

| Ausbringungsgrad | $A_G$ | a), b) | 0,85 | 4 Bahnen |
| | | c) | 0,80 | 6 Bahnen |

Um die Ausbringung über einen längeren Zeitraum — beispielsweise ein Schicht — ermitteln zu können, muß von einer mittleren Teilelänge von ca. 90 mm ausgegangen werden.

Dieser Wert ergibt sich als Mittelwert aus der Länge aller Teile, gewichtet entsprechend des prozentualen Anteiles an der Gesamtproduktion.

Die Geschwindigkeiten der einzelnen Teilebänder ergeben sich in Abstimmung mit dem Band der Klebersprühstation.

Für eine Anlage mit 6 Bahnen muß von einem geringeren Ausbringungsgrad ausgegangen werden, da durch die erhöhte Ausbringung ein öfteres Umrüsten und durch die größere Anzahl von Bahnen und Sortiereinrichtungen von einer höheren Störungsquote ausgegangen werden muß.

Bezugszeichenliste
    2 Bremsbelag
    4 Rückenplatten
    6 Reibkörper
    8 Klebstoffschicht
    10 Öffnung
    12 Öffnung
    14 Fortsatz
    16 Fortsatz
    18 noppenförmiger Vorsprung, Noppen
    20 noppenförmiger Vorsprung, Noppen
    22 noppenförmiger Vorsprung, Noppen
    24 noppenförmiger Vorsprung, Noppen

26 Sandstrahlstation
28 Vereinzelungsstation
30 Wendestation
32 Längsausrichtstation
34 Staustrecke
36 Lageprüf- und Drehstation
38 Übergabestation
40 Klebestation
42 Band
44 Reinigungsbad
46 Bürsten
48 Trockenstrecke
50 Ausgabestation

**Patentansprüche**

1. Verfahren zur Herstellung von Bremsbelägen (2), die eine Rückenplatte (4) und einen damit verklebten Reibkörper (6) aufweisen, wobei auf einer Seite (Klebeseite) der Rückenplatte (4) Vorsprünge (18, 20, 22, 24) angeordnet sind und ein Klebstoff (8) aufgetragen wird, um in einem weiteren Verfahrensschritt den Reibkörper (6) mit der Rückenplatte (4) zu verbinden, dadurch gekennzeichnet, daß als Vorsprünge (18, 20, 22, 24) an der Klebeseite der Rückenplatte Noppen (18, 20, 22, 24) angeformt werden und daß für nachfolgende Verfahrensschritte nach dem Aufbringen der Klebstoffschicht (4) die Rückenplatten (4) übereinander und in Abstand voneinander in Punktauflage angeordnet werden.

2. Verfahren nach Anspruch 1, dadurch gekennzeichnet, daß die Rückenplatten (4) nach einem Vereinzelungs- und Ausrichtschritt in zumindest einer Reihe angeordnet werden, und daß die Rückenplatten (4) in einem weiteren Verfahrensschritt gewendet werden, so daß alle Rückenplatten (4) mit der Klebeseite nach oben angeordnet sind.

3. Verfahren nach Anspruch 2, dadurch gekennzeichnet, daß vor dem Auftragen des Klebstoffes auf die Klebeseite der Rückenplatten (4) in einem weiteren Verfahrensschritt ein Längsausrichtung der Rückenplatten erfolgt.

4. Verfahren nach einem der vorhergehenden Ansprüche, dadurch gekennzeichnet, daß die Vorsprünge (18, 20, 22, 24) an Begrenzungsrändern der Rückenplatte, (4) insbesondere an Begrenzungsrändern von in der Rückenplatte (4) vorgesehenen Ausnehmungen (10, 12) vorgesehen werden.

5. Verfahren nach einem der Ansprüche 1 oder 4, dadurch gekennzeichnet, daß zumindest drei nicht auf einer Linie liegende Noppen (18, 20, 22, 24) vorgesehen sind.

6. Verfahren nach einem der vorhergehenden Ansprüche, dadurch gekennzeichnet, daß die Rückenplatte (4) vor den Ausricht- und Wendeschritten und dem Aufbringen des Klebstoffes sandgestrahlt wird.

7. Vorrichtung zur automatisierten Herstellung von Bremsbelägen (2), die eine Rückenplatte (4) und einen damit verklebten Reibkörper (6) aufweisen, wobei auf einer Seite (Klebeseite) der Rückenplatte (4) Vorsprünge (18, 20,22, 24) angeordnet sind und ein Klebstoff aufgetragen wird, um in einem weiteren Verfahrensschritt den Reibkörper (6) mit der Rückenplatte (4) zu verbinden, gekennzeichnet durch folgende aufeinanderfolgend angeordnete Stationen: ein Vereinzelungsstation (28), in der die Rückenplatten (4) vereinzelt und in zumindest einer Reihe angeordnet werden, eine Wendestation (30), in der auf der Klebeseite liegende Rückenplatten (4) gewendet werden, um die Station mit der Klebeseite nach oben zu verlassen, eine Ausrichtstation (32), in der die Rückenplatten (4) in Längsrichtung ausgerichtet werden, eine Lageprüf- und Drehstation (36), in der die Rückenplatten gedreht werden, so daß alle Rückenplatten die Station in gleicher Lage verlassen, eine Klebestation (40), in der der Klebstoff auf die Rückenplatte aufgetragen wird, eine Trockenstation zum Ablüften des Klebstoffes, und eine Ausgabestation (50) zum Ausgeben und Stapeln der Rückenplatten in Magazinen.

8. Vorrichtung nach Anspruch 7, dadurch gekennzeichnet, daß vor der Vereinzelungsstation (28) eine Sandstrahlstation (26) angeordnet ist.

9. Vorrichtung nach Anspruch 7 oder 8, dadurch gekennzeichnet, daß die Vereinzelungsstation (28) zumindest eine Schikane aufweist, um die Rückenplatten (4) in eine Reihe zu bringen.

10. Vorrichtung nach Anspruch 9, dadurch gekennzeichnet, daß angrenzend and die Schikane ein Kanal angeordnet ist, so daß die Rückenplatten über die Schikane in den Kanal geführt werden.

11. Vorrichtung nach Anspruch 10, dadurch gekennzeichnet, daß der Kanal als verfahrbarer Doppel- bzw. Mehrfachkanal ausgebildet ist.

12. Vorrichtung nach Anspruch 10 oder 11, dadurch gekennzeichnet, daß anschließend an den Kanal bzw. die Kanäle eine Transportstrecke vorgesehen ist, die eine der Anzahl der Kanäle entsprechende Anzahl von parallelen Transportbändern aufweist.

13. Vorrichtung nach Anspruch 12, dadurch gekennzeichnet, daß anschließend an die Transportbänder eine entsprechende Anzahl schneller laufender Transportbänder vorgesehen ist.

14. Vorrichtung nach einem der Ansprüche 7 bis 13, dadurch gekennzeichnet, daß die Wendestation (30) eine schiefe Ebene aufweist, auf der zumindest eine Schikane angeordnet ist, um die Rückenplatten mit der Klebeseite nach unten seitlich auszulenken, so daß sie beim Fallen vom Rand der schiefen Ebene auf eine darunter angeordnetes Transportband gewendet werden.

15. Vorrichtung nach einem der Ansprüche 7 bis 14, dadurch gekennzeichnet, daß Längsausrichtstation (32) Schikanen aufweist, um die Rückenplatten passiv auszurichten.

16. Vorrichtung nach einem der Ansprüche 7 bis 15, dadurch gekennzeichnet, daß zwischen der Längsausrichtstation (32) und der Lageprüf- und Drehstation (36) eine Staustrecke (38) vorgesehen ist.

17. Vorrichtung nach einem der Ansprüche 7 bis 16, dadurch gekennzeichnet, daß die Lageprüf- und Drehstation (36) eine Erkennungseinrichtung aufweist, mit der die Lage der Rückenplatten feststellbar ist.

18. Vorrichtung nach einem der Ansprüche 7 bis 17, dadurch gekennzeichnet, daß die Klebestation (40) eine Klebesprüheinrichtung aufweist.

19. Vorrichtung nach einem der Ansprüche 7 bis 18, dadurch gekennzeichnet, daß die Klebestation (40) ein grobmaschiges Transportband (42) aufweist, auf dem die Rückenplatten beim Transport durch die Klebestation (40) angeordnet sind.

20. Vorrichtung nach Anspruch 19, dadurch gekennzeichnet, daß an der Klebestation ein Reinigungsbad (44) angeordnet ist, durch das das Transportband (42) nach Abgabe der Rückenplatten geführt wird.

21. Vorrichtung nach einem der Ansprüche 7 bis 20, dadurch gekennzeichnet, daß die Klebestation (40) eine ozillierende Sprühpistole aufweist.

22. Vorrichtung nach einem der Ansprüche 7 bis 21, dadurch gekennzeichnet, daß in der Ausgabestation (50) Magazine vorgesehen sind, in die die Rückenplatten überführt werden.

23. Bremsbelag, mit einer Rückenplatte und einem damit verklebten Reibkörper, dadurch gekennzeichnet, daß an der Klebeseite der Rückenplatte (4) Noppen (18, 20, 22, 24) angeformt sind, die an Begrenzungsrändern der Rückenplatte (4), insbesondere an Begrenzungsrändern von in der Rückenplatte (4) vorgesehenen Ausnehmungen (10, 12) vorgesehen sind.

24. Bremsbelag nach Anspruch 23, dadurch gekennzeichnet, daß an der Klebeseite der Rückenplatte zumindest drei, insbesondere vier nicht auf einer Linie liegende Noppen (18, 20, 22, 24) vorgesehen sind.

**Revendications**

1. Procédé de réalisation de garnitures de frein (2) comprenant une plaquette de support (4) et un élément de friction (6) collé sur celle-ci, du type selon lequel on dispose des saillies (18, 20, 22, 24), et on applique une colle (8), sur une face (face de collage) de la plaquette de support (4), de façon à permettre un assemblage de l'élément de friction (6) avec la plaquette de support (4) au cours d'une étape ultérieure du procédé, caractérisé en ce qu'on façonne des tétons (18, 20, 22, 24) sur la face de collage de la plaquette de support pour constituer les saillies (18, 20, 22, 24) et en ce que, pour les étapes du procédé qui suivent l'application de la couche de colle (8), on dispose les plaquettes de support (4) d'une manière superposée et en appui ponctuel, de façon qu'elles soient espacées entre elles.

2. Procédé suivant la revendication 1, caractérisé en ce qu'après une étape de séparation des plaquettes une par une et d'alignement, on dispose les plaquettes de support (4) suivant au moins une rangée et en ce que dans une autre étape du procédé, on retourne les plaquettes de support (4) de façon qu'elles soient toutes disposées avec la face de collage tournée vers le haut. .

3. Procédé suivant la revendication 2, caractérisé en ce qu'avant l'application de la colle sur la face de collage de la plaquette de support (4), on exécute, au cours d'une autre étape du procédé, un alignement longitudinal des plaquettes de support.

4. Procédé suivant l'une des revendications précédentes, caractérisé en ce qu'on prévoit les saillies (18, 20, 22, 24) sur des bordslimites de la la plaquette de support (4), notamment sur des bords limites d'évidements (10, 12) prévus dans cette denière.

5. Procédé suivant l'une des revendications 1 et 4, caractérisé en ce qu'on prévoit au moins trois tétons (18, 20, 22, 24) qui ne sont pas en ligne.

6. Procédé suivant l'une des revendications précédentes, caractérisé en ce qu'on procède à un sablage au jet de la plaquette de support (4) avant les étapes d'alignement et de retournement et l'application de colle.

7. Installation de réalisation automatisée de garnitures de frein (2) comprenant une la plaquette de support (4) et un élément de friction (6) collée sur celle-ci, des sailles (18, 20, 22, 24) étant disposées, et de la colle appliquée, sur une face (face de collage) de la plaquette de support (4) afin de permettre l'assemblage de l'élément de friction (6) avec la plaquette de support (4) au cours d'une autre étape du procédé, caractérisée en ce qu'elle comporte, disposés d'une manière successive, les postes suivants: un poste (28) de séparation des plaquettes une par une, où les plaquettes de support (4) sont séparées une par une et sont disposées en au moins une rangée, un poste de retournement (30), où les plaquettes de support (4) qui se trouvent sur la face de collage sont retournées, de façon à quitter ce post avec la face de collage tournée vers le haut, un poste d'alignement (32), où les plaquettes de support (4) sont alignées suivant la direction longitudinale, un poste de contrôle de position et de pivotement (36), où les plaquettes de support font l'objet d'un pivotement, de façon que toutes les plaquettes de support quittent ce poste dans la même position, un poste de collage (40), où le colle est appliquée sur les plaquettes de support, un poste de

EP 0 163 030 B1

séchage servant à la ventilation de la colle et un poste de sortie (50) servant à évacuer et empiler les plaquettes de support dans les magasins.

8. Installation suivant la revendication 7, caractérisée en ce qu'un poste de sablage au jet (26) est disposé en amont du poste (28) de séparation de plaquettes une par une.

9. Installation suivant l'une des revendications 7 et 8, caractérisée en ce que le poste (28) de séparation des plaquettes une par une comprend au moins un déflecteur permettant d'amener les plaquettes de support (4) suivant une rangée.

10. Installation suivant la revendication 9, caractérisée en ce qu'un conduit est disposé à la suite du déflecteur, de sorte que les plaquettes de support sont guidées dans le conduit en s'appuyant sur ce déflecteur.

11. Installation suivant la revendication 10, caractérisée en ce que le conduit est réalisé sous la forme d'un conduit double ou multiple déplaçable.

12. Installation suivant l'une des revendications 10 et 11, caractérisée en ce qu'à la suite du ou des conduits, il est prévu une voie de transport qui comprend un nombre de bandes transporteuses parallèles correspondant au nombre des conduits.

13. Installation suivant la revendication 12, caractérisée en ce qu'à la suite des bandes transporteuses, il est prévu un nombre correspondant de bandes transporteuses à déplacement plus rapide.

14. Installation suivant l'une des revendications 7 à 13, caractérisée en ce que le poste de retournement (30) comporte un plan incliné sur lequel est diposé au moins un déflecteur permettant de faire dévier latéralement les plaquettes de support dont la face de collage est tournée vers le bas, de sorte qui, en tombant du bord de ce plan incliné, elles se trouvent retournées sur une bande transporteuse disposée au-dessous.

15. Installation suivant l'une des revendications 7 à 14, caractérisée en ce que le poste d'alignement longitudinal (32) comporte des déflecteurs permettant un alignement passif des plaquettes de support.

16. Installation suivant l'une des revendications 7 à 15, caractérisée en ce qu'une voie de retenue (38) est prévue entre le poste d'alignement longitudinal (32) et le poste de contrôle de position et de pivotemente (36).

17. Installation suivant l'une des revendications 7 à 16, caractérisée en ce que le poste de contrôle de position et de pivotement (36) comporte un appareil de reconnaissance à l'aide duquel la position des plaquettes de support peut être relevée.

18. Installation suivant l'une des revendications 7 à 17, caractérisée en ce que le poste de collage (40) comporte un appareil de pulvérisation de colle.

19. Installation suivant l'une des revendications 7 à 18, caractérisée en ce que le poste de collage (40) comporte une bande transporteuse (42) à grandes mailles sur laquelle les plaquettes de support sont disposées lors de leur transport à travers ce poste de collage (40).

20. Installation suivant la revendication 19, caractérisée en ce qu'au poste de collage, il est prévu un bain de nettoyage (44) que la bande de transport (42) traverse après avoir transmis les plaquettes de support.

21. Installation suivant l'une des revendications 7 à 20, caractérisée en ce que le poste de collage (40) comporte un pistolet de pulvérisation oscillant.

22. Installation suivant l'une des revendications 7 à 21 caractérisée en ce qu'au poste de sortie (50), il est prévu des magasins dans lesquels les plaquettes de support sont transférées.

23. Garniture de freinage, comprenant une plaquette de support et un élément de friction collée sur celle-ci, caractérisée en ce que des tétons (18, 20, 22, 24) sont façonnées sur la face de collage de la plaquette de support (4), ces tétons étant prévus sur des bords-limites de la plaquette de support (4), notamment sur des bords-limites d'évidements (10, 12) ménagés dans cette plaquette de support (4).

24. Garniture de frein suivant la revendication 23, caractérisée en ce que, sur la face de collage de la plaquette de support, il est prévu au moins trois, et notamment quatre, tétons (18, 20, 22, 24) qui ne sont pas en ligne.

## Claims

1. A process of manufacturing brake pads (2) comprising a backplate (4) and a friction element (6) cemented thereto, with projections (18, 20, 22, 24) being arranged on one side (bonding side) of the backplate (4), and with an adhesive (8) being applied to bond, in another process step, the friction element (6) to the backplate (4), characterized in that as projections (18, 20, 22, 24) naps (18, 20, 22, 24) are shaped on the bonding side of the backplate, and in that for subsequent process steps, after application of the adhesive coating (8), the backplates (4) are superposed in point contact and in spaced relationship from one another.

2. A process as claimed in claim 1, characterized in that the backplates (4), after performance of a singling or aligning step, are disposed in at least one row, and in that the backplates (4), in another process step, are reversed such that all backplates (4) be disposed with their adhesive side on top.

3. A process as claimed in claim 2, characterized in that prior to the application of adhesive to the bonding side of the backplate (4), a longitudinal alignment of the backplates will be performed in another process step.

9

4. A process as claimed in any one of the preceding claims, characterized in that the projections (18, 20, 22, 24) are provided on confining edges of the backplate (4), in particular on confining edges of recesses (10, 12) provided in the backplate (4).

5. A process as claimed in any one of claims 1 or 4, characterized in that at least three non-aligned naps (18, 20, 22, 24) are provided.

6. A process as claimed in any one of the preceding claims, characterized in that, prior to the aligning and reversing steps and prior to the application of the adhesive, the backplate (4) is sand-blast.

7. An apparatus for the automated manufacture of brake pads (2) comprising a backplate (4) and a friction element (6) cemented thereto, with projections (18, 20, 22, 24) being arranged on one side (bonding side) of the backplate (4) and with an adhesive (8) being applied to bond, in another process step, the friction element (6) to the backplate (4), characterized by the following stations in successive arrangement: a singling station (28) where to single the backplates (4) and to arrange them in at least one row, a reversion station (30) where to reverse the backplates (4) resting on the adhesive side to make sure that they leave the station with the adhesive side on top, an aligning station (32) where to align the backplates (4) in the longitudinal direction, a position check and turning station (36) where to turn the backplates to make sure that all the backplates leave the station in the same position, a bonding station (40) where to apply the adhesive to the backplate, a drying station for ventilating the adhesive, and a discharge station (50) where to discharge and stack the backplates in magazines.

8. An apparatus as claimed in claim 7, characterized in that a sand-blast station (26) is arranged ahead of the singling station (28).

9. An apparatus as claimed in claims 7 or 8, characterized in that the singling station (28) includes at least one baffle plate to bring the backplates (4) in alignment.

10. An apparatus as claimed in claim 9, characterized in that adjoining to the baffle plate, a passageway is provided so as to lead the backplates via the baffle plate into the passageway.

11. An apparatus as claimed in claim 10, characterized in that the passageway is of a transportable double or multiple channel configuration.

12. An apparatus as claimed in claims 10 or 11, characterized in that following the passageway(s) is a transportation line comprising a number of parallel transportation belts corresponding in number to that of the passageways.

13. An apparatus as claimed in claim 12, characterized in that following the transportation belts is a corresponding number of faster running transportation belts.

14. An apparatus as claimed in any one of the claims 7 to 13, characterized in that the reversion station (30) includes an inclined plane disposed on which is at least one baffle plate to laterally deflect the backplates with their bonding sides down so as to reverse them when dropping from the edge of the inclined plane onto a transportation belt disposed therebelow.

15. An apparatus as claimed in any one of the claims 7 to 14, characterized in that the longitudinal alignment station (32) comprises baffle plates for passive alignment of the backplates.

16. An apparatus as claimed in any one of the claims 7 to 15, characterized in that provided between the longitudinal alignment station (32) and the position check and turning station (36) is a barring line (38).

17. An apparatus as claimed in any one of the claims 7 to 16, characterized in that the position check and turning station (36) includes a recognition means serving to identify the position of the backplates.

18. An apparatus as claimed in any one of the claims 7 to 17, characterized in that the bonding station (40) includes an adhesive spray means.

19. An apparatus as claimed in any one of the claims 7 to 18, characterized in that the bonding station (40) comprises a coarse-meshed transportation belt (42) on which are disposed the backplates when transported through the bonding station (40).

20. An apparatus as claimed in claim 19, characterized in that disposed on the bonding station is a cleansing bath (44) through which the transportation belt (42) is passed after the backplates have been discharged.

21. An apparatus as claimed in any one of the claims 7 to 20, characterized in that the bonding station (40) includes an oscillating spray gun.

22. An apparatus as claimed in any one of the claims 7 to 21, characterized in that magazines are provided in the discharge station (50) for transferring the backplates thereinto.

23. A brake pad comprising a backplate and a friction element cemented thereto, characterized in that naps (18, 20, 22, 24) are shaped on the bonding side of the backplate (4) which are provided on confining edges of the backplate (4), in particular on confining edges of recesses (10, 12) provided in the backplate (4).

24. A brake pad as claimed in claim 23, characterized in that at least three, preferably four non-aligned naps (18, 20, 22, 24) are provided on the bonding side of the backplate.

# Fig. 1

# Fig. 2

# Fig. 3

Fig. 4

40

42

46    44

Fig. 5

20        18

4

Fig. 6